# EUROPEAN PATENT SPECIFICATION

(11) **EP 0 861 190 B1**
(45) Date of publication and mention of the grant of the patent: **04.07.2001**
(21) Application number: 97929847.8
(22) Date of filing: 06.06.1997
(51) Int. Cl.: B65B 3/00

(54) **METHOD AND APPARATUS FOR CHARGING PRESSURIZED SYSTEMS**
VERFAHREN UND VORRICHTUNG ZUM AUFLADEN VON DRUCKMITTELSYSTEMEN
PROCEDE ET APPAREIL POUR CHARGER DES SYSTEMES SOUS PRESSION

(30) Priority: 18.09.1996 US 710486
(43) Date of publication of application: 02.09.1998
(73) Proprietor: UVIEW ULTRAVIOLET SYSTEMS INC., Mississauga, Ontario L4Y 1M5 (CA)
(72) Inventor: Trigani, Phil, Mississauga, Ontario L4X 1K1 (CA); Kroll, Michael I., Syosset, NY 11791 (US)
(74) Representative: Denmark, James
(86) International application number: PCT/US97/09896
(87) International publication number: WO 98/12109

(56) References cited:
- WO-A-97/39295
- US-A- 3 193 146
- US-A- 3 430 819
- US-A- 3 795 262
- US-A- 4 339 058
- US-A- 4 467 620
- US-A- 5 027 605
- US-A- 5 037 396
- US-A- 5 070 917
- US-A- 5 377 724
- US-A- 5 431 654
- US-A- 5 535 790

## Description

### Technical Field

The present invention relates to a method of charging a closed, pressurized air conditioning or refrigeration fluid system with a secondary fluid comprising the features of the preamble of claim 1 and to an apparatus for performing the method comprising the features of the preamble of claim 4.

Such a method and respectively apparatus are known from US-A-4 467 620.

Pressurized fluid systems are very common in industrialized society. The fluid can be gaseous, for example, air conditioning coolant, nitrogen, argon and the like; liquid, for example, hydraulic fluid, oil, aqueous and non-aqueous solutions, and the like; viscous, for example, glue; and non-viscous. All such systems are similar, however, in that they are all pressurizable, closed systems. As such, these systems generally operate optimally within a certain pressure range. If the internal pressure falls below this range, the system needs to be "recharged" with the appropriate fluid.

Some systems contain a combination of fluids. For example, air conditioning and refrigeration systems generally contain a refrigerant (the primary fluid) in combination with a lubricating oil (the secondary fluid) for the compressor and other critical components. The lubricating oil is generally present in fairly low quantities, usually less than 5% of the total fluid. The present invention provides for the introduction of these secondary fluids into systems charged with the primary fluids.

Some systems, for example, air conditioning/refrigeration coolant lines, are designed to remain closed during use; theoretically, these systems should not require recharging because they should not lose or consume their contents. In practice, however, the internal pressure inside such systems tends to drop over time, due to leakage, however minor, or degradation/decomposition of the pressurized material. Accordingly, these systems commonly require periodical recharging. With regard to known charging methods, the particular method chosen varies with the application. For example, gaseous systems such as those described above are generally charged by means of a container which is at a pressure higher than that of the system being charged. The charging container is connected to the system being charged, essentially forming a combined, dosed system, and the connection between the two systems is opened, usually by a valve. Because the charging container has a higher partial pressure than the system being charged, opening the connection will cause the combined system to move toward equilibrium, that is, a final pressure intermediate the two initial system pressures. When the pressure of the system being charged reaches an appropriate level, or the combined system reaches equilibrium, the connecting valve is closed and the charging container is disconnected. With this method of charging, is it essential that the pressure of the charging container be higher than that of the system being charged. The use of non-pressurized charging containers would avoid the expense, inconvenience and safety concerns associated with highly pressurized containers, and would consequently represent a significant improvement in the art.

For more viscous materials, rather than using the above-described method of charging in which the system remains closed and pressurized, it is more common to 1) open the system, thereby depressurizing it; 2) add additional material; 3) dose the system; and 4)repressurize the system. This method can be readily employed when the charging fluid is, for example, a non-volatile liquid, for example, hydraulic fluid. Unlike gaseous systems, when these systems are opened, the enclosed material can be retained without pressurization. With this method, both the charging container and the system being charged are generally at ambient pressure.

Highly viscous materials, for example, glue or caulking, are most commonly applied in an open, non-pressurized environment. The general concept of dispensing a fluid from a chamber by means of dispensing gun apparatus has been known for many years and has been effectively embodied in a wide variety of dispensing guns for dispensing various types of materials, most commonly viscous fluids and pastes. Atypical example is standard caulking gun, which utilizes a disposable cartridge filled with a non-pressurized viscous fluid. These guns generally include squeezable handle and trigger assemblies which, when operated, utilize their mechanical advantage to insert a piston into the cartridge, thereby forcing the contents out through a reduced diameter dispensing nozzle.

US3795262 to Post describes a manual apparatus and method for introducing a fluid into a high pressure refrigeration system which comprises a squeezable bottle having a discharge section on one end thereof, and a charging hose which is provided with connectors which allow for connection of said hose at one end to the discharge section of the bottle and at the other end to the refrigeration system The bottle may contain a liquid dehydrant or other fluid which is to be driven into the pressurised refrigeration system. Although the bottle cannot withstand the pressure of the refrigeration system, the charging hose and discharge section are suitably reinforced, and a pair of check valves is provided at either end of the discharge section to prevent the bottle from being subjected to the pressure of the refrigeration system.

The charging is hose is firstly connected to the discharge section of the bottle and an amount of liquid is squeezed through both the discharge section and the hose to purge same of air. Thereafter the hose is connected to the system, and a pair of pliers or other suitable device capable of exerting sufficient pressure to overcome that of the system is used to squeeze the discharge section thus forcing liquid dehydrant into the system.

US4467620 to Bradley and others describes a device for injecting a predetermined amount of a lubricating oil into a refrigeration system comprising a cylinder in which a piston reciprocally moves by virtue of rotation of a screw threaded piston rod which passes through a tapped aperture in the centre of one of the cylinder end caps. The cylinder is additionally capped at its alternate end and provided with a filling aperture and an injection assembly provided with a manually operable valve therein and with a connector at its free end for connection to a refrigeration system. When the device is adapted for connection to a pressurised refrigeration system, the connector at the free end of the injection assembly is ideally of the Schroeder type which is usually closed except when connected to a suitable complementary connector.

The injector assembly consists of firstly a manually operated fill valve which allows fluid within the cylinder to be forced into the injection assembly by movement of the piston. Coupled to this valve is a union connection which can be loosened, and at the free end of the assembly there is provided a Schroeder valve as mentioned above. A conduit links the union connection to the check valve. In use, the check valve is firstly coupled to the refrigeration system. Secondly, the union connection is loosened to purge air from the conduit. Thirdly, the manually operated fill valve is opened, and finally the piston is moved within the cylinder to force the oil from therein into the system. Although there is much description of how the use of a threaded piston rod is very useful as a means for delivering a precise quantity of oil into the refrigeration system, at the commencement of delivery, the conduit between check valve and fill valve is empty and oil must pass through the conduit before being delivered into the system through said check valve.

US5027605 to Hardesty describes an apparatus for dispensing a measured amount of a hygroscopic lubricant into an air conditioning system which includes reciprocal pump attached to a conduit having a check valve at one end and a simple coupling at the other. The reciprocal pump is also connected to a container with the hygroscopic lubricant therein and the connection of pump and container is such that there is no exposure of the lubricant to the atmosphere during connection. Thereafter, the conduit is connected to the air conditioning system and the operation of the pump draws predetermined quantities of lubricant into the pump cylinder and ultimately forces same through the conduit into the system.

Although much is made of the extremely hygroscopic nature of the lubricant and the requirement to avoid atmospheric contact therewith, it is not explicitly described how the lubricant passes through an empty pump after connection with the container is first made without coming into contact with at least some air. The device described in this patent is only marginally different from that described in US3795262 above because the pump described here is broadly identical to the discharge section described therein.

### Disclosure of the invention

According to a first aspect of the invention there is provided a method of charging a closed, pressurized air conditioning or refrigeration fluid system with a secondary fluid comprising the steps of sealably and releasably connecting to said system a closed, unpressurised container containing a predetermined amount of said secondary fluid, said container having a piston sealably disposed therein and having two ends, a first end of said container being sealably secured to a first end of a charging conduit with a second end of said charging conduit being sealably and releasably connected to said system, mechanically forcing said secondary fluid out of said container through said conduit and into said fluid system via displacement of said piston within said container,disconnecting said container from said system, characterized in that said container is a cylindrical cartridge received within a cartridge receiver having cartridge gripping means and piston driving means and in that the piston driving means is mechanically operated to drive the piston through the cartridge and thus force the secondary fluid into the system.

In a second aspect of the invention there is provided an apparatus for performing the method above comprising, a closed, unpressurised container containing a predetermined amount of said secondary fluid, said container having two ends and having a piston sealably disposed therein, a first end of said container being for connection to said system, said system and said first end of said container being sealably and releasably connected by a charging conduit having two ends, a first end sealably secured to said first open end of said cartridge and a second end sealably connected to said system, means for mechanically forcing said secondary fluid out of said container through said conduit and into said fluid system via displacement of said piston within said container, characterized in that said container is a cylindrical cartridge received within a cartridge receiver having cartridge gripping means and piston driving means and in that the piston driving means is mechanically operated to drive the piston through the cartridge.

### Brief Description of the Drawing Figures

Various advantages of the present invention will become more fully appreciated as the same becomes better understood when considered in conjunction with the accompanying drawings, in which like reference characters designate the same or similar parts throughout the several views, and wherein;

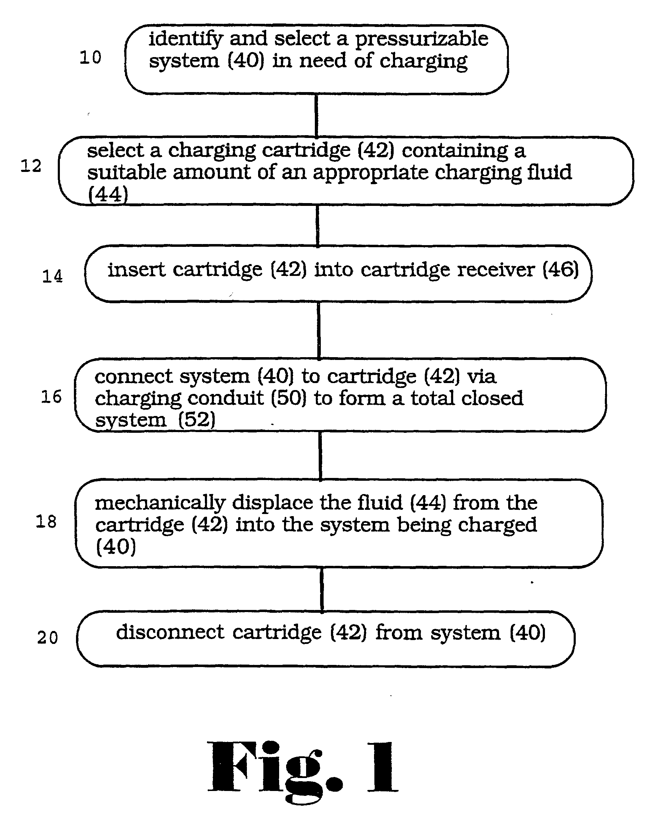

FIGURE 1 is a flow diagram of the basic elements of the method of the present invention.

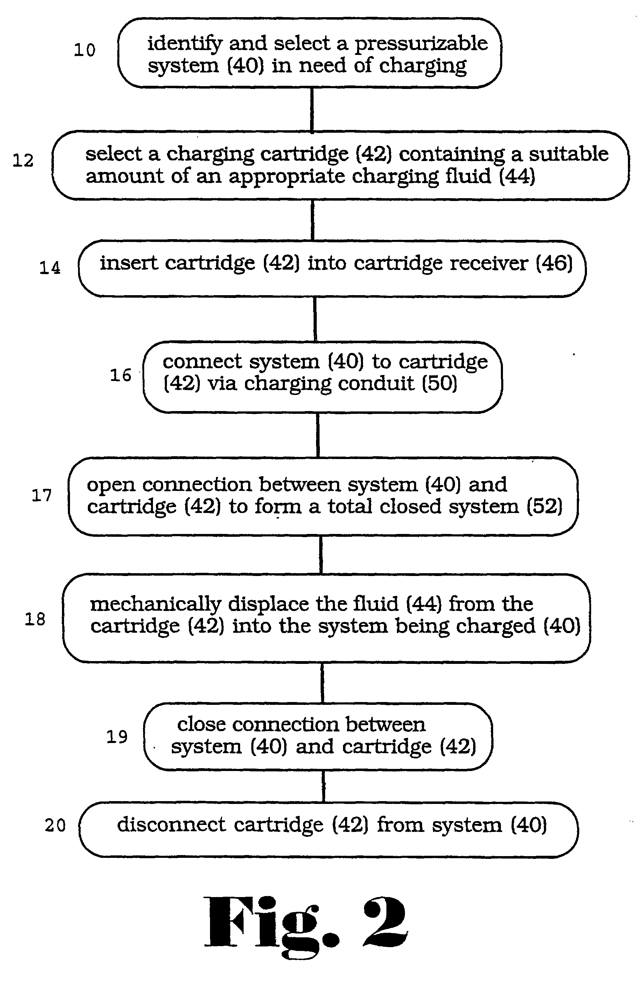

FIGURE 2 is flow diagram of the method of the present invention showing separate steps for opening and closing the connection between the charging cartridge and the system being charged.

### List of Reference Numbers in the Drawing Figures

**10** A pressurized system in need of charging (**40**) is identified and selected for charging.
**12** After the system to be charged (**40**) is selected, a charging cartridge (**42**) is selected which contains an appropriate amount of an appropriate charging fluid (**44**) at about ambient pressure.
**14** The cartridge (**42**) is then inserted into a cartridge receiver (**46**) having mechanical means (**48**) for displacing the charging fluid (**44**) from the cartridge (**42**) into the system to be charged (**40**).
**16** The cartridge (**42**) and the system being charged (**40**) are then connected to each other by a suitably adapted charging conduit (**50**).
**17** After the cartridge (**42**) and the system being charged (**40**) are connected to each other by the charging conduit (**50**), the connection is opened, thus creating, in effect, a single, combined, closed, pressurized system (**52**).
**18** The mechanical means (**48**) is employed, thus displacing the charging fluid (**44**) from the cartridge (**42**) into the system being charged (**40**).
**19** The reverse of step **17**, above. After the contents (**44**) of the cartridge (**42**) are forced into the system being charged (**40**), the connection between the system being charged (**40**) and the cartridge (**42**) is closed.
**20** The reverse of step **16**, above. The charging conduit (**50**) is disconnected from the system being charged (**40**).
**40** Pressurized system in need of charging.
**42** Charging cartridge. This is filled, at about ambient pressure, with a preselected quantity of charging fluid (**44**).
**44** Charging fluid. This is the fluid to be introduced into the pressurized system (**40**).
**46** Cartridge receiver. This component is adapted to releasably engage the cartridge (**42**) and contains mechanical means for displacing the charging fluid (**44**) from the cartridge (**42**).
**48** Mechanical means for displacing the charging fluid (**44**) from the cartridge (**42**).
**50** Charging conduit. This component is essentially a conduit adapted at one end to securely and releasably engage the cartridge (**42**) and at the other end to securely and releasably engage the system being charged (**40**), effectively combining these two items into a single, closed system (**52**).
**52** Combined closed system which results from connecting the cartridge (**42**) to the system being charged (**40**) with the charging conduit (**50**).

### Detailed Description of the Preferred Embodiment

In the foregoing definitions the term "fluid" is meant to include gases and liquids. "Unpressurized" or "non-pressurized" means at or about ambient (atmospheric) pressure. A "system in need of charging" refers both to systems which are underpressurized and to those which are already pressurized with a primary fluid but which require the introduction of a secondary fluid. Examples include air conditioning and refrigeration systems which are fully charged with refrigerant but which require the addition of a secondary fluid such as lubricating oil and/or dye.

The present invention concerns a novel method and apparatus for charging a closed, pressurizable fluid system with an appropriate fluid from an unpressurized container. The novel method comprises a) sealably and releasably connecting to a system in need of charging, a closed, unpressurized container containing a predetermined amount of the appropriate fluid, so that the system and the container combine to form a single closed binary system, b) mechanically forcing the contents out of the container into the system being charged, and c) disconnecting the container from the system.

Preferably, the container is a cylindrical cartridge having two ends, a first open end which connects to the system being charged, and a second open end having a piston sealably disposed therein. Once the cartridge is connected to the system being charged, sliding the piston down the length of the cartridge will displace its contents, forcing them out the first open end and into the system being charged. During this step, the cartridge and its connections will be put under pressure greater than or equal to that of the system being charged. Accordingly, fittings and materials must be chosen with this in mind. In most applications, simple screw―on fittings will suffice, with 0―rings effective in sealing connections, particularly with the piston/cartridge wall interface. It has been found that, using standard fittings and connections, including a plurality of 0―rings received within circumferentially oriented grooves on the exterior surface of the piston, the method and apparatus of the present invention is readily adaptable for use in systems within a pressure range of from about ―2x10⁵ N/m² to about 2x10⁶ N/m² (-30-300psi/pounds per square inch).

With regard to the cartridge, it is preferred that it be received within a cartridge receiver having cartridge gripping means and piston driving means. The fluid in the cartridge is mechanically forced out of the cartridge via displacement by the piston, which, in turn, is driven down the cartridge by a piston driving means. The exact nature of the piston driving means is not critical, as long as it develops sufficient mechanical advantage to drive the piston down the cartridge against the pressure of the system. Typical examples include the aforementioned squeezable handle and trigger assemblies, commonly used on such devices as caulking guns. For example, the piston driving means could include a) a squeezable handle assembly, b) a ratcheted piston driving rod, and c) a double pawl mechanism functionally coupling the handle assembly with the driving rod so that squeezing the handle drives the rod into the piston and down the length of the cartridge, thus displacing its contents.

With regard to the charging cartridges, such cartridges can be either single―use (disposable) or refillable.

It is anticipated that, in general usage, the method and apparatus of the present invention will further include a charging conduit having two ends, a first end sealably secured to the first open end of the cartridge, and a second end sealably connected to the system being charged. Such a removable conduit would allow a standard size cartridge to be used to refill a great variety of pressurized systems. All one would need would be an adaptor fitting allowing the conduit to connect with the system being recharged.

## Claims

1. A method of charging a closed, pressurized air conditioning or refrigeration fluid system with a secondary fluid comprising the steps of:
a. sealably and releasably connecting to said system a closed, unpressurised container containing a predetermined amount of said secondary fluid, said container having a piston sealably disposed therein and having two ends, a first end of said container being sealably secured to a first end of a charging conduit with a second end of said charging conduit being sealably and releasably connected to said system,
b. mechanically forcing said secondary fluid out of said container through said conduit and into said fluid system via displacement of said piston within said container
c. disconnecting said container from said system,
characterized in that said container is a cylindrical cartridge received within a cartridge receiver having cartridge gripping means and piston driving means and in that the piston driving means is mechanically operated to drive the piston through the cartridge and thus force the secondary fluid into the system.

2. A method according to claim 1 characterised in that the fluid is a dye.

3. A method according to claim 1 characterised in that the fluid is an oil.

4. An apparatus for performing the method according to one of the claims 1 to 3 comprising:
a. a closed, unpressurised container containing a predetermined amount of said secondary fluid, said container having two ends and having a piston sealably disposed therein, a first end of said container being for connection to said system, said system and said first end of said container being sealably and releasably connected by a charging conduit having two ends, a first end sealably secured to said first open end of said cartridge and a second end sealably connected to said system,
b. means for mechanically forcing said secondary fluid out of said container through said conduit and into said fluid system via displacement of said piston within said container
characterized in that
said container is a cylindrical cartridge received within a cartridge receiver having cartridge gripping means and piston driving means and in that the piston driving means is mechanically operated to drive the piston through the cartridge.

5. The apparatus of claim 4 characterised in that said piston driving means comprises
i. a squeezable handle assembly;
ii. a ratcheted piston driving rod extending from said piston, and
iii. a double pawl mechanism functionally coupling said handle assembly with said driving rod so that squeezing said handle drives the rod into said piston and down the length of said cartridge.

6. The apparatus of claim 4 characterised in that said piston driving means comprises a squeezable handle and trigger assembly.

7. The apparatus of any of claims 4-6 characterised in that the secondary fluid within the cartridge is a dye.

8. The apparatus of any of claims 4-6 characterised in that the secondary fluid within the cartridge is an oil.

9. The apparatus of any of claims 4-8 characterised in that the cartridge and its connections are capable of withstanding pressures in the range - 30 psi to 300 psi (-2x10⁵ N/m² to 2x10⁶ N/m²).

10. The apparatus of any of claims 4-9 characterised in that the cartridge is disposable.

11. The apparatus of any of claims 4-9 characterised in that the cartridge is re-fillable.

## Patentansprüche

1. Verfahren zum Aufladen eines geschlossenen Klimatisierungs- oder - Kühlfluiddrucksystems mit einem Sekundärfluid, umfassend die folgenden Schritte:
a. hermetisch abschließbares und lösbares Verbinden des genannten Systems mit einem geschlossenen, drucklosen Container, der eine vorbestimmte Menge des genannten Sekundärfluids enthält, wobei in dem genannten Container ein Kolben hermetisch abschließbar angeordnet ist und der Container zwei Enden hat, wobei ein erstes Ende des genannten Containers hermetisch abschließbar an einem ersten Ende einer Aufladeleitung verbunden ist, wobei ein zweites Ende der genannten Aufladeleitung hermetisch abschließbar und lösbar mit dem genannten System verbunden ist,
b. mechanisches Pressen des genannten Sekundärfluids aus dem genannten Container durch die genannte Leitung in das genannte Fluidsystem mittels der Verdrängung des genannten Kolbens in dem genannten Container,
c. Abtrennen des genannten Containers von dem genannten System,
dadurch gekennzeichnet, dass der genannte Container eine zylindrische Patrone ist, die in einer Patronenaufnahme mit einem Patronengreifinittel und einem Kolbentreibmittel aufgenommen wird, und dadurch, dass das Kolbentriebmittel mechanisch betätigt wird, um den Kolben durch die Patrone zu treiben und so das Sekundärfluid in das System zu pressen.

2. Verfahren nach Anspruch 1, dadurch gekennzeichnet, dass das Fluid ein Farbstoffist.

3. Verfahren nach Anspruch 1, dadurch gekennzeichnet, dass das Fluid ein Öl ist.

4. Vorrichtung zur Durchführung des Verfahrens nach einem der Ansprüche 1 bis 3, umfassend:
a. einen geschlossenen, drucklosen Container, der eine vorbestimmte Menge des genannten Sekundärfluids enthält, wobei der genannte Container zwei Enden und einen hermetisch abschließbar darin angeordneten Kolben aufweist, wobei ein erstes Ende des genannten Containers für die Verbindung mit dem genannten System dient, wobei das genannte System und das genannte erste Ende des genannten Containers hermetisch abschließbar und lösbar mit einer Aufladeleitung mit zwei Enden verbunden wird, wobei ein erstes Ende hermetisch abschließbar mit dem genannten ersten offenen Ende der genannten Patrone befestigt und ein zweites Ende hermetisch abschließbar mit dem genannten System verbunden wird,
b. ein Mittel zum mechanischen Pressen des genannten Sekundärfluids aus dem genannten Container durch die genannte Leitung in das genannte Fluidsystem mittels der Verdrängung des genannten Kolbens in dem genannten Container,
dadurch gekennzeichnet, dass der genannte Container eine zylindrische Patrone ist, die in einer Patronenaufnahme mit einem Patronengreifinittel und einem Kolbentreibmittel aufgenommen wird, und dadurch, dass das Kolbentreibmittel mechanisch betätigt wird, um den Kolben durch die Patrone zu treiben.

5. Vorrichtung nach Anspruch 4, dadurch gekennzeichnet, dass das genannte Kolbentreibmittel folgendes umfasst:
i. eine zusammendrückbare Griffbaugruppe;
ii. eine Kolbentreibstange mit Ratsche, die von dem genannten Kolben verläuft, und
iii. einen Doppelklinkenmechanismus, der die genannte Griffbaugruppe funktionell mit der genannten Treibstange verbindet, so dass durch Zusammendrücken des genannten Griffes die Stange in den genannten Kolben und durch die genannte Patrone getrieben wird.

6. Vorrichtung nach Anspruch 4, dadurch gekennzeichnet, dass das genannte Kolbentreibmittel eine zusammendrückbare Griff- und Abzugbaugruppe umfasst.

7. Vorrichtung nach einem der Ansprüche 4-6, dadurch gekennzeichnet, dass das Sekundärfluid in der Patrone ein Farbstoff ist.

8. Vorrichtung nach einem der Ansprüche 4-6, dadurch gekennzeichnet, dass das Sekundärfluid in der Patrone ein Öl ist.

9. Vorrichtung nach einem der Ansprüche 4-8, dadurch gekennzeichnet, dass die Patrone und ihre Verbindungen Drücken im Bereich von -30 psi bis 300 psi (-2 x 10⁵ N/m² bis 2 x 10⁶ N/m²) standhalten kann.

10. Vorrichtung nach einem der Ansprüche 4-9, dadurch gekennzeichnet, dass die Patrone wegwerfbar ist.

11. Vorrichtung nach einem der Ansprüche 4-9, dadurch gekennzeichnet, dass die Patrone nachfüllbar ist.

## Revendications

1. Un procédé pour charger un système de fluide de climatisation ou de réfrigération fermé, sous pression, avec un fluide secondaire, comprenant les étapes suivantes :
a. connexion étanche et libérable audit système d'un récipient fermé et non pressurisé contenant une quantité prédéterminée dudit fluide secondaire, ledit récipient ayant un piston disposé de façon étanche à l'intérieur de celui-ci et ayant deux extrémités, une première extrémité dudit récipient étant fixée de façon étanche à une première extrémité d'un conduit chargeur avec une deuxième extrémité dudit conduit chargeur étant connectée de façon étanche et libérable audit système ;
b. forçage mécanique dudit fluide secondaire hors dudit récipient à travers ledit conduit et dans ledit système de fluide par déplacement dudit piston à l'intérieur dudit récipient ;
c. déconnexion dudit récipient relativement audit système ;
caractérisé en ce que ledit récipient est une cartouche cylindrique reçue dans un récepteur de cartouche ayant des moyens de serrage de cartouche et des moyens de commande de piston et en ce que les moyens de commande de piston sont commandés mécaniquement pour mouvoir le piston à travers la cartouche et forcer ainsi le fluide secondaire dans le système.

2. Un procédé selon la revendication 1 caractérisé en ce que le fluide est un colorant.

3. Un procédé selon la revendication 1 caractérisé en ce que le fluide est une huile.

4. Un appareil pour exécuter le procédé selon l'une quelconque des revendications 1 à 3, comprenant :
a. un récipient fermé et non pressurisé contenant une quantité prédéterminée dudit fluide secondaire, ledit récipient ayant deux extrémités et ayant un piston disposé de façon étanche à l'intérieur, une première extrémité dudit récipient étant à connecter audit système, ledit système et ladite première extrémité dudit récipient étant connectés de façon étanche et libérable par un conduit chargeur ayant deux extrémités, une première extrémité fixée de façon étanche à ladite première extrémité de ladite cartouche et une seconde extrémité connectée de façon étanche audit système ;
b. des moyens de forçage mécanique dudit fluide secondaire hors dudit récipient à travers ledit conduit et dans ledit système de fluide par déplacement dudit piston à l'intérieur dudit récipient ;
caractérisé en ce que :
ledit récipient est une cartouche cylindrique reçue à l'intérieur d'un récepteur de cartouche ayant des moyens de serrage de cartouche et des moyens de commande de piston et en ce que les moyens de commande de piston sont actionnés mécaniquement pour mouvoir le piston à travers la cartouche.

5. L'appareil selon la revendication 4, caractérisé en ce que lesdits moyens de piston comportent :
i. un ensemble à poignée serrable ;
ii. une tige de commande de piston à rochet qui s'étend depuis ledit piston ; et
iii. un mécanisme à double cliquet qui couple fonctionnellement ledit ensemble à poignée avec ladite tige de commande de sorte qu'un serrage de ladite poignée pousse la tige dans ledit piston et de haut en bas sur la longueur de ladite cartouche.

6. L'appareil selon la revendication 4, caractérisé en ce que lesdits moyens de commande de piston comportent un ensemble à poignée serrable et gâchette.

7. L'appareil selon l'une quelconque des revendications 4 à 6, caractérisé en ce que le fluide secondaire à l'intérieur de la cartouche est un colorant.

8. L'appareil selon l'une quelconque des revendications 4 à 6, caractérisé en ce que le fluide secondaire à l'intérieur de la cartouche est une huile.

9. L'appareil selon l'une quelconque des revendications 4 à 8, caractérisé en ce que la cartouche et ses connexions sont capables de supporter des pressions dans la plage de -30 psi à 300 psi (-2x10⁵ N/m² à 2x10⁶ N/m²).

10. L'appareil selon l'une quelconque des revendications 4 à 9, caractérisé en ce que la cartouche est jetable.

11. L'appareil selon l'une quelconque des revendications 4 à 9, caractérisé en ce que la cartouche est rechargeable.
